# EUROPEAN PATENT APPLICATION

(11) **EP 3 211 279 A1**
(43) Date of publication of application: **30.08.2017**
(21) Application number: 15859896.1
(22) Date of filing: 21.10.2015
(51) Int. Cl.: F16J 15/52, B62D 1/16, F16J 3/04, F16J 15/3204

(54) **DUST SEAL**

(30) Priority: 14.11.2014 JP 2014231185
(71) Applicant: NOK Corporation, Tokyo 105-8585 (JP)
(72) Inventor: SHUTO Yuichi, Fukushima-shi Fukushima 960-1193 (JP); SEKI Masahiro, Fukushima-shi Fukushima 960-1193 (JP)
(74) Representative: Prüfer & Partner mbB Patentanwälte · Rechtsanwälte
(86) International application number: PCT/JP2015/079639
(87) International publication number: WO 2016/076087

(57) **Abstract**

Provided is a dust seal which can facilitate assembly works and can increase a bonding strength between a bushing and an accordion unit. A dust seal (1) has an annular shape, and includes a bushing (10) and a dust seal body (20). The dust seal body (20) includes an attaching portion (21), a first bellows (22), and a second bellows (23). The first bellows (22) is integrally formed from the same material as the attaching portion (21). The outer periphery of the first bellows (22) is joined to the inner peripheral surface of the attaching portion (21) and, the inner periphery thereof is fixed to the outer peripheral surface of the bushing (10). The outer periphery of the second bellows (23) is fixed to the inner peripheral surface of the attaching portion (21), and the inner periphery thereof is locked to the bushing (10).

## Description

### Technical Field

The present invention relates to a dust seal for preventing entry of foreign matter such as dust, rain, or the like, and particularly relates to a steering dust seal for a steering shaft of a steering device for a car or other vehicles.

### Background Art

In a steering device for a vehicle, e.g. a car, a steering shaft is inserted through a column hole opened in the dash panel separating the vehicle interior and the engine room. A gap between the steering shaft and the column hole is sealed with a steering dust seal. The steering dust seal prevents entry of foreign matter such as dust, rain, or the like to the vehicle interior.

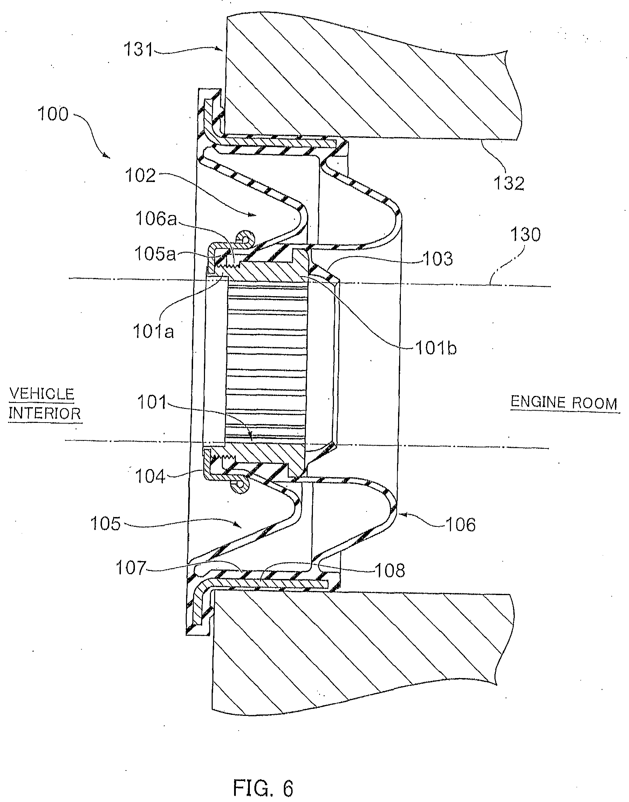

Fig. 6 is a cross-sectional view schematically showing the structure of a conventional dust seal. As shown in Fig. 6, a dust seal 100 as a conventional steering dust seal includes a cylindrical bushing 101 made of a low-friction material, a dust seal body 102 made of a rubber, a annular seal lip 103, which is present at an end portion of the bushing 101 adjacent to the engine room, and an attaching member 104.

A steering shaft 130 is inserted through the bushing 101, and the bushing 101 is slidable on the steering shaft 130. The dust seal body 102 includes a first bellows (accordion unit) 105 and a second bellows 106, which project toward the engine room, and a cylindrical attaching portion 107 joined to the end portions of the first and second bellows 105 and 106 on the outer periphery side. A cylindrical metal reinforcing ring 108, which serves as a reinforcement conforming to the shape of the attaching portion 107, is embedded in the attaching portion 107. An inner end portion 105a of the first bellows 105 and an inner end portion 106a of the second bellows 106 are fitted in the outer periphery of an end portion 101a of the bushing 101 adjacent to the vehicle interior.

The attaching member 104 is an annular metal member that has a cross section in a generally L shape fitted in the inner end portion 105a on the inner side so as to cover the inner end portion 105a of the first bellows 105. Since the attaching member 104 is fitted in the inner end portion 105a of the first bellows 105 in this manner, the inner end portion 105a of the first bellows 105 is locked in a direction toward the vehicle interior side and pushed toward the inner periphery side, therefore, the first bellows 105 is fixed to the end portion 101a of the bushing 101 adjacent to the vehicle interior, at the inner end portion 105a. In addition, as shown in Fig. 6, the inner end portion 106a of the second bellows 106 is locked in a direction toward the vehicle interior by the inner end portion 105a of the first bellows 105 fixed as described above, pushed toward the inner periphery side, and fixed to the end portion 101a of the bushing 101 adjacent to the vehicle interior.

The seal lip 103, which is a rubber annular member, is disposed at the end portion 101b of the bushing 101 adjacent to the engine room and is slidably in contact with a surface of the steering shaft 130. The seal lip 103 prevents entry of foreign matter such as rain, dust or the like to a space between the steering shaft 130 and the bushing 101, and leakage of a lubricant on the inner periphery of the bushing 101.

As shown in Fig. 6, in the dust seal 100, the attaching portion 107 of the dust seal body 102 is closely fitted in a column hole 132 of a dash panel 131 for fixation to the column hole 132 of the dash panel 131. Hence, entry of foreign matter such as rain, dust or the like in the gap between the dust seal 100 and the column hole 132 is prevented (for example, see Patent Literature 1).

With this structure in the conventional dust seal 100, the bushing 101 is movable with the first and second bellows 105 and 106 relatively to the dash panel 131 (the column hole 132). The steering shaft 130 is tilted or displaced and moves relatively to the column hole 132 due to adjustment of the handle level or vibrations occurring while the car is running. However, the bushing 101 movable relatively to the column hole 132 can follow the movement of the steering shaft 130. This maintains the position of the seal lip 103 and thus works for ensuring prevention of entry of foreign matter such as rain, dust, or the like from the engine room to the vehicle interior.

### Citation List

### Patent Literature

Patent Literature 1: Japanese Patent No.4987300

### Summary of Invention

### Technical Problem

In the conventional dust seal 100, the bushing 101 is separated from the first bellows 105 and the second bellows 106, resulting in a large number of components and a complex assembly process of the conventional dust seal 100. In addition, the first bellows 105 and the second bellows 106 are attached to the bushing 101 by fitting the attaching member 104, so that adequate attaching strength is not provided and the deviation or vibration of the steering shaft 130 may unlock the mounting member 104 and remove the fixation between each of the first bellows 105 and the second bellows 106 and the bushing 101. Even if the attaching member 104 does not come off, loosened fixation between each of the first bellows 105 and the second bellows 106 and the bushing 101 prevents the bushing 101 and thus the seal lip 103 from staying in their proper positions, and there may be a problem with a decrease in sealing performance between the seal lip 103 and the steering shaft 130.

It is an object of the present invention, which has been made to solve the above problem, to provide a dust seal which can be made with a simple assembly process and exhibits high joint strength between the bushing and each accordion unit.

### Solution to Problem

To achieve the above object, a dust seal of the present invention is a dust seal for sealing a gap between an opening in a receiving member and a shaft inserted through the opening, including: a dust seal body in an annular shape centered about an axis; and a bushing in an annular shape centered about the axis, through which the shaft is slidably inserted, characterized in that the dust seal body including: an attaching portion that is fitted into the opening of the receiving portion, is in an annular shape centered about the axis, and is made of an elastic material, a first accordion unit that has an accordion made of an elastic material and is an annular shape centered about the axis, and a second accordion unit that has an accordion made of an elastic material and is an annular shape centered about the axis, the first accordion unit and the second accordion unit are arranged side by side in a direction of the axis, the first accordion unit is integral with the attaching portion, is joined to an inner peripheral surface of the attaching portion at an outer periphery, and is fixed to an outer peripheral surface of the bushing at an inner periphery, and the second accordion unit is fixed to the inner peripheral surface of the attaching portion at the outer periphery, and locked to the bushing at the inner periphery.

In the dust seal according to one aspect of the present invention, the second accordion unit is locked to the bushing at the inner periphery by engagement between the second accordion unit and the bushing.

In the dust seal according to one aspect of the present invention, the second accordion unit is fitted to an inner peripheral surface of the attaching portion at the outer periphery and fixed to the attaching portion.

In the dust seal according to one aspect of the present invention, the first accordion unit includes a first seal lip extending in the direction of the axis, and the first seal lip slidably contacts the outer peripheral surface of the shaft.

In the dust seal according to one aspect of the present invention, the second accordion unit includes a second seal lip extending in the direction of the axis, and the second seal lip slidably contacts the outer peripheral surface of the shaft.

### Effects of Invention

A dust seal according to the present invention can facilitate assembly works and can increase a bonding strength between a bushing and an accordion unit.

### Brief Description of Drawings

[Fig. 1] A cross-sectional view along an axis, showing a schematic structure of a dust seal according to a first embodiment of the present invention.
[Fig. 2] An enlarged sectional view illustrating a joint portion between a bushing and each of a first bellows and a second bellows in the dust seal illustrated in Fig. 1.
[Fig. 3] A partial sectional view for describing a method of manufacturing the dust seal illustrated in Fig. 1.
[Fig. 4] A partial sectional view for illustrating a usage state of the dust seal according to the first embodiment of the present invention.
[Fig. 5] A partial sectional view for illustrating a schematic structure of a dust seal according to a second embodiment of the present invention, and an enlarged sectional view illustrating a bushing and a contact portion in the dust seal.
[Fig. 6] A cross-sectional view schematically showing the structure of a conventional dust seal.

### Description of Embodiments

Embodiments according to the present invention will now be described with reference to the drawings.

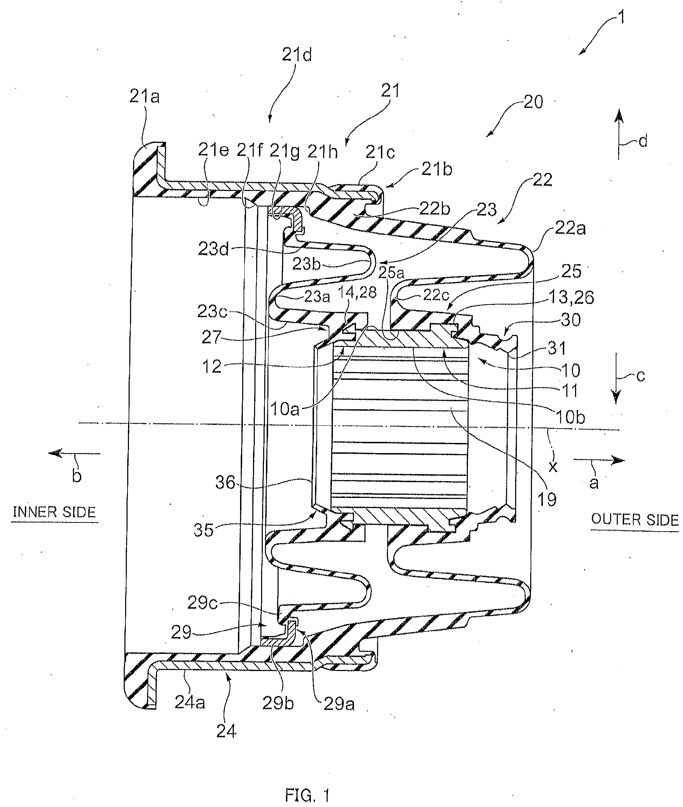

Fig. 1 is a cross-sectional view along an axis, showing a schematic structure of a dust seal according to a first embodiment of the present invention.

As shown in Fig. 1, a dust seal 1 according to the first embodiment of the present invention has an annular shape centered about an axis x and includes a bushing 10 and a dust seal body 20. Hereinafter, as shown in Fig. 1, the direction indicated by an arrow a in the direction of the axis x is referred to as an outer side or an engine room side, and the direction indicated by an arrow b in the direction of the axis x is referred to as an inner side or a vehicle interior side. The direction (indicated by an arrow c) getting closer to the axis x in the direction vertical to the axis x (hereinafter also referred to as a radial direction) extends and which is adjacent to the axis x is referred to as an inner periphery side, and the direction (indicated by an arrow d) getting further away from the axis x in the vertical direction to the axis x is referred to as an outer periphery side.

The bushing 10 has an annular shape centered about the axis x, specifically a cylindrical shape, and is made of a low-friction material. Since a shaft is slidably inserted through the bushing 10 in a usage state as described later, the bushing 10 has an inner diameter corresponding to the outer diameter of the shaft inserted therethrough.

The dust seal body 20 includes a attaching portion 21, a first bellows (first accordion unit) 22, and a second bellows (second accordion unit) 23. The attaching portion 21 has an annular shape centered about the axis x, specifically a cylindrical shape, and is fitted into an opening in a receiving member as described later. The first bellows 22 has an annular shape centered about the axis x and is specifically a generally circular hollow disc shape and has concave and convex portions in the direction of the axis x. Similarly, the second bellows 23 has an annular shape centered about the axis x and is specifically a generally circular hollow disc shape and has concave and convex portions in the direction of the axis x. The first bellows 22 and the second bellows 23 are arranged side by side in the direction of the axis x, and the first bellows 22 is disposed further on the outer side than the second bellows 23.

As described later, the first bellows 22 is integral with the attaching portion 21 and formed from the same material as the attaching portion 21. The first bellows 22, at an outer periphery of the first bellows 22, is joined to an inner peripheral surface of the attaching portion 21, and at an inner periphery of the first bellows 22, is fixed to an outer peripheral surface of the bushing 10. In addition, the second bellows 23, at an outer periphery of the second bellows 23, is fixed to the inner peripheral surface of the attaching portion 21, and, at the inner periphery of the second bellows 23, is locked to the bushing 10.

The first and second bellows 22 and 23 allow the bushing 10 to be movable and their parallel arrangement provides a sound insulation function. The attaching portion 21, the first bellows 22, and the second bellows 23 are made of the same elastic material such as rubber. The dust seal body 20 includes a metal reinforcing ring 24 having an annular shape centered about the axis x.

The bushing 10 includes a first claw 13 which is a portion to fix the first bellows 22, at an end portion 11 which is an end portion of the bushing 10 on the outer side, in an outer peripheral surface 10a which is an outer peripheral surface of the bushing 10. In addition, the bushing 10 includes a second claw 14 which is a portion to lock the second bellows 23, at an end portion 12 which is an end portion of the bushing 10 on the inner side, in the outer peripheral surface 10a. The first claw 13 extends over the entire circumference in the circumferential direction at the end portion 11 in the outer peripheral surface 10a. Likewise, the second claw 14 extends over the entire circumference in the circumferential direction at the end portion 12 in the outer peripheral surface 10a. Note that the first and second claws 13 and 14 may not extend over the entire circumference in the outer peripheral surface 10a. For example, the first and second claws may extend in an arc shape along a part of the entire circumference in the circumferential direction, respectively, and a plurality of claws 13, 14 may be provided at equal angular intervals in the circumferential direction.

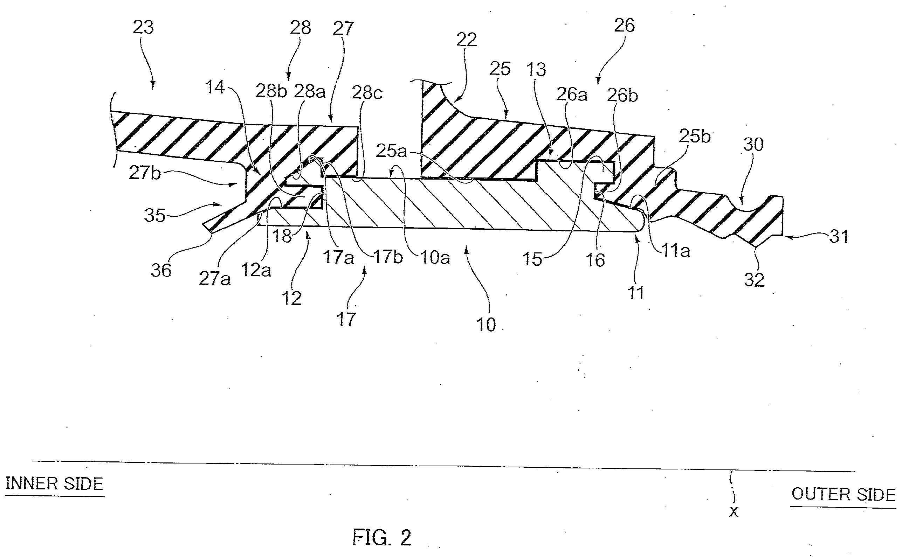

Fig. 2 is an enlarged sectional view illustrating a joint portion between the bushing 10 and each of the first bellows 22 and the second bellows 23.

As illustrated in Fig. 2, the first claw 13 is an annular projecting body projecting toward the outer periphery side. The first claw 13 includes a projection 15 extending in the direction of the axis x and a depression 16 depressed toward the inner side in the direction of the axis x. The depression 16 is an annular space formed in a manner an end portion outer peripheral surface 11a, which is a portion of the outer peripheral surface 10a at the end portion 11, and the projection 15 radially facing each other. The end portion outer peripheral surface 11a is a conical taper surface whose diameter decreases toward the outer side direction.

In addition, as illustrated in Fig. 2, the second claw 14 includes a hook-shaped hook portion 17 extending in the direction of the axis x and a depression 18 depressed toward the outer side in the direction of the axis x. The hook portion 17 has a cross section along the axis x (hereinafter also referred to as a cross section) whose shape is a wedge shape. The hook portion 17 includes a conical surface shaped taper surface 17a whose diameter increases toward the outer side direction and a step portion 17b forming a step following the taper surface 17a on the outer side and running toward the inner periphery side. Note that the depression 18 is an annular space formed in a manner that an end portion outer peripheral surface 12a, which is a portion in the outer peripheral surface 10a at the end portion 12, and the hook portion 17 radially facing each other.

To an inner peripheral surface 10b, which is an inner peripheral surface of the bushing 10 slidably contacted by an unillustrated shaft, a lubricant such as a grease or the like is applied. As illustrated in Fig. 1, in order to retain the lubricant, a plurality of trenches 19 extending in the direction of the axis x are provided at equal angular intervals in the circumferential direction. The trenches 19 are not limited to straight shaped, but may be, for example, spiral shaped, wave shaped, or annular shaped. Note that the number of trenches 19 may be one. By the trenches 19, the lubricant is retained on the inner peripheral surface 10b of the bushing 10, thus allowing the shaft to slide smoothly over a long period of time. Note that the bushing 10 may not have the trenches 19.

The bushing 10 is made of a low-friction material as described above. Examples of the low-friction material include hard resin materials and metal materials. Examples of the resin materials include polyamide resins, polytetrafluoroethylene resins and the like. Examples of the metal materials include aluminum and the like.

As illustrated in Fig. 1, in the attaching portion 21 of the dust seal body 20, a flange 21a is formed. The flange 21a projects toward the outer periphery side at an inner side end portion of the attaching portion 21. An outer peripheral surface 21c is formed. The outer peripheral surface 21c is an outer peripheral surface exposed at an end portion 21b which is an outside end portion. An inner peripheral surface 21d, which is an inner peripheral surface of the attaching portion 21, includes a cylindrical surface 21e, a taper surface 21f, a retention surface 21g, and a step portion 21h in the order from the inner side. The cylindrical surface 21e is a cylindrical surface extending in the direction of the axis x, and the taper surface 21f is a conical surface whose diameter decreases toward the outer side direction. The retention surface 21g is a cylindrical surface extending in the direction of the axis x and fixes the second bellows 23 on the outer periphery side, to be described later. The step portion 21h is a hollow disc-shaped surface extending from an end portion on the outer side of the retention surface 21g toward the inner side direction in the radial direction.

The reinforcing ring 24 is made of a metal, for example, stainless steel, steel SPCC (cold rolled steel sheet), or other metals, has a shape corresponding to the attaching portion 21, and is attached to the outer periphery side of the attaching portion 21. The reinforcing ring 24 may be at least partly embedded in the attaching portion 21. In this embodiment, the reinforcing ring 24 is embedded in the outer periphery side of the attaching portion 21 such that its end portion on the outer side is embedded in and covered with the outside end portion 21b of the attaching portion 21, and the surface of its other portion on the outer periphery side is exposed.

When the dust seal 1 is fitted into the opening in the receiving portion, the outer peripheral surface 21c of the outer end portion 21b of the attaching portion 21 and an outer peripheral surface 24a, which is the surface on the outer periphery side of the reinforcing ring 24, come in close contact with the inner peripheral surface of the opening, thus sealing the gap between the receiving portion and the dust seal 1 as described later.

The first bellows 22 has convex and concave portions in the direction of the axis x and these convex and concave portions extend in an annular shape centered about the axis x to form a bellows that can expand and contract from the axial x direction to the radial direction. Specifically, the first bellows 22 includes an annular convex portion 22a projecting toward the outer side and the convex portion 22a forms the aforementioned bellows. The first bellows 22 is joined to the inner peripheral surface 21d of the attaching portion 21 at an outer periphery side end portion of the first bellows 22, namely, at an end portion 22b which is the outer periphery side end portion of the convex portion 22a. More specifically, the end portion 22b of the first bellows 22 on the outer periphery side is joined to the inner peripheral surface 21d at the outer side of the step portion 21h.

The first bellows 22 further includes a contact portion 25 at an inner periphery side end portion of the first bellows 22, namely, at an end portion 22c which is the inner periphery side end portion of the convex portion 22a. As illustrated in Figs. 1 and 2, the contact portion 25 is a cylindrical portion centered about the axis x and extending in the direction of the axis x from the end portion 11 on the outer periphery side of the bushing 10 to a portion located on the inner side of the first claw 13. An inner peripheral surface 25a, which is the inner peripheral surface of the contact portion 25, has a shape corresponding to the outer peripheral surface 10a of the bushing 10. The contact portion 25 has a shape which is in close contact with the outer peripheral surface 10a of the bushing 10 in a range extending in the direction of the axis x.

In addition, the contact portion 25, at the inner peripheral surface 25a, includes a first housing portion 26 enabling the first bellows 22 to be fixed to the bushing 10. The first housing portion 26 is a depression running on the inner peripheral surface 25a over the entire circumference in the circumferential direction and has a cross-sectional shape corresponding to the first claw 13. More specifically, the first housing portion 26 of the first bellows 22 includes a depression 26a having the same cross-sectional shape as that of the projection 15 of the first claw 13; and a projection 26b having the same cross-sectional shape as that of the depression 16 of the first claw 13, so that the entire first claw 13 of the bushing 10 can be housed thereinside in close contact with each other.

Because of the aforementioned shape of the bushing 10 and the first bellows 22 in the dust seal 1, as illustrated in Figs. 1 and 2, the inner periphery of the first bellows 22 is fixed to the outer peripheral surface 10a of the bushing 10 with the first claw 13 and the first housing portion 26. Specifically, the first claw 13 is fitted into the first housing portion 26; the projection 15 of the first claw 13 is housed in the depression 26a of the first housing portion 26 in close contact with each other, in addition, the projection 26b of the first housing portion 26 is housed in the depression 16 of the first claw 13 in close contact with each other, and therefore, the first claw 13 is firmly engaged with the first housing portion 26. Thus, the inner peripheral surface 25a of the contact portion 25 of the first bellows 22 closely contacts the outer peripheral surface 10a of the bushing 10.

As described above, the end portion outer peripheral surface 11a at the end portion 11 of the bushing 10 is configured to be a taper surface as illustrated in Fig. 2. Thus, the portion (portion on the inner peripheral side of an end portion 25b which is the outer side end portion of the contact portion 25) of the contact portion 25 of the first bellows 22 contacting the end portion outer peripheral surface 11a has a radial thickness increasing toward the outer side. Therefore, the rigidity of the projection 26b of the first housing portion 26 increases in the contact portion 25, which allows the first housing portion 26 to firmly retain the first claw 13 to thereby strengthen the engagement between the first claw 13 and the first housing portion 26.

The first bellows 22 further includes an annular first seal lip 30 extending from the end portion 25b on the outer peripheral surface side toward the outer side. As illustrated in Figs. 1 and 2, the first seal lip 30 has a substantially conical tubular shape whose diameter decreases from the inner side toward the outer side. The first seal lip 30 includes an annular lip tip 32 at an end portion 31 which is the outside end portion and the lip tip 32 has a wedge-shaped cross section projecting toward the inner side. The lip tip 32 is formed so as to be slidably in close contact with the outer peripheral surface of a shaft inserted into the bushing 10 and to seal the inside of the bushing 10 in the usage state to be described later.

The first seal lip 30 is integrally formed with the first bellows 22 and made of the same material as the first bellows 22.

Like the first bellows 22, the second bellows 23 has convex and concave portions in the direction of the axis x, and these convex and concave portions extends in an annular shape centered about the axis x to form a bellows that can expand and contract from the axial x direction to the radial direction. Specifically, the second bellows 23 includes an annular concave portion 23a concave toward the inner side and an annular convex portion 23b convex toward the outer side connecting to the concave portion 23a on the outer periphery side in the order from the inner periphery side. The concave portion 23a and the convex portion 23b form the aforementioned bellows.

Like the first bellows 22, the second bellows 23 includes a contact portion 27 at an end portion on the inner peripheral surface side thereof, namely, at an end portion 23c which is the inner periphery side end portion of the concave portion 23a. As illustrated in Figs. 1 and 2, the contact portion 27 is a portion having an annular shape centered about the axis x and formed so as to cover the end portion 12 on the inner side of the bushing 10. An inner peripheral surface 27a, which is the inner peripheral surface of the contact portion 27, has a shape corresponding to the outer peripheral surface 10a of the bushing 10. The contact portion 27 has a shape to be in close contact with the outer peripheral surface 10a of the bushing 10 in a range extending in the direction of the axis x.

In addition, the contact portion 27 includes a second housing portion 28 on an inner peripheral surface 27a for enabling the second bellows 23 to be locked to the bushing 10. The second housing portion 28 is a depression circumferentially extending on the inner peripheral surface 27a over the entire circumference and has a cross-sectional shape corresponding to the second claw 14. Specifically, the second housing portion 28 of the second bellows 23 includes a depression 28a having the same cross-sectional shape as that of the hook portion 17 of the second claw 14 and a projection 28b having the same cross-sectional shape as that of the depression 18 of the second claw 14, so that the entire second claw 14 of the bushing 10 can be housed thereinside in close contact with each other. In addition, an annular step portion 28c projecting toward the inner periphery side in the radial direction is formed at an end portion on the outer side of the contact portion 27 and is configured to be able to contact the step portion 17b of the second claw 14 in the direction of the axis x.

Because of the aforementioned shape of the bushing 10 and the second bellows 23 in the dust seal 1, as illustrated in Figs. 1 and 2, the inner periphery of the second bellows 23 is locked and fixed to the outer peripheral surface 10a of the bushing 10 with the second claw 14 and the second housing portion 28. Specifically, the second claw 14 is fitted into the second housing portion 28, the hook portion 17 of the second claw 14 is housed in the depression 28a of the second housing portion 28 in close contact with each other, the projection 28b of the second housing portion 28 is housed in the depression 18 of the second claw 14 in close contact with each other, and therefore, the second claw 14 is firmly engaged with the second housing portion 28. Thus, the inner peripheral surface 27a of the contact portion 27 of the second bellows 23 closely contacts the outer peripheral surface 10a of the bushing 10.

The second bellows 23 further includes an annular second seal lip 35 extending from an end portion 27b which is an inner periphery side end portion toward the inner side. As illustrated in Figs. 1 and 2, the second seal lip 35 has a conical cylindrical shape whose diameter decreases from the outer side toward the inner side and an end portion on the inner side is a lip tip 36. The lip tip 36 is formed so as to be slidably in close contact with the outer peripheral surface of the shaft inserted into the bushing 10 and to seal the inside of the bushing 10 in the usage state to be described later.

The second seal lip 35 is integrally formed with the second bellows 23 and is made of the same material as the second bellows 23.

The second bellows 23 further includes a fitting part 29 at an end portion on the outer periphery side thereof, namely, at an end portion 23d which is the outer periphery side end portion of the convex portion 23b. The fitting part 29 includes a fitting ring 29a having an L-shaped cross section having an annular shape centered about the axis x. As illustrated in Fig. 1, the fitting ring 29a includes a fitting surface 29b, which is a cylindrical surface, on the outer periphery side. As described later, the fitting ring 29a is configured to be fitted, retained, and fixed to the retention surface 21g of the attaching portion 21 at the fitting surface 29b. The fitting part 29 further includes a holder 29c holding a fitting ring 29a. The shape of the holder 29c may be any shape as long as the holder 29c can hold the fitting ring 29a. The fitting ring 29 is made of a metal such as stainless steel and SPCC (cold rolled steel sheet).

In the dust seal 1, the fitting part 29 is fitted into and held by the retention surface 21g of the attaching portion 21, and then the second bellows 23 is fixed on the outer periphery side. The fitting surface 29b of the fitting ring 29a of the fitting part 29 closely contacts the retention surface 21g. The fitting ring 29a contacts the step portion 21h of the attaching portion 21, thereby enabling positioning on the outer side in the direction of the axis x.

As described later, the first bellows 22 and the second bellows 23, in the usage state, are repeatedly expanded and contracted in a direction from the axis x direction to the radial direction such that the bushing 10 follows the movement of the shaft. For this reason, to the attaching portion 21, the first bellows 22, and the second bellows 23 fatigue resistance is required in addition to flexibility. Further, to the first bellows 22 and the second bellows 23, ozone resistance is also required. Examples of rubber materials of the attaching portion 21, the first bellows 22, and the second bellows 23 include ethylene propylene rubber (EPDM), chloroprene rubber (CR), and the like.

Note that the bellows shape of the first bellows 22 (convex portion 22a) is not limited to the aforementioned shape, but may be any shape as long as the shape is expandable and contractible in a direction from the axial x direction to the radial direction. Note also that the bellows shape of the second bellows 23 (the concave portion 23a and the convex portion 23b) is not limited to the aforementioned shape, but may be any shape as long as the shape is expandable and contractible in a direction from the axial x direction to the radial direction.

As described above, in the dust seal 1 according to the first embodiment of the present invention, the first bellows 22 is firmly fixed to the bushing 10 by the engagement between the first claw 13 and the first housing portion 26. In addition, the second bellows 23 is firmly fixed to the bushing 10 by the engagement between the second claw 14 and the second housing portion 28. Therefore, it is possible to increase the bonding strength between the bushing 10 and each of the first bellows 22 and the second bellows 23.

In the dust seal body 20, the attaching portion 21 and the first bellows 22 are integrally formed from the same material. Therefore, it is possible to increase the strength of the joint portion (end portion 22b) between the first bellows 22 and the attaching portion 21.

Consequently, in the dust seal 1 according to the embodiment of the present invention, the attaching portion 21, the first bellows 22, and the second bellows 23 have high strength against the above-described expansion and contraction movement, resulting in improved fatigue resistance against repeated expansion and contraction due to the movement of the bushing 10.

In addition, the bushing 10 is joined to the first bellows 22 and the second bellows 23, which can lengthen the length of the bushing 10 in the direction of the axis x. Thus, the bushing 10 can hold the shaft in a region extending long in the direction of the axis x in the usage state. Even when the shaft is greatly eccentric, the bushing 10 can maintain a stable position with respect to the shaft by following the movement of the shaft. This structure can appropriately maintain the contact position of the first and second seal lips 30 and 35 with respect to the shaft and can improve the sealing performance and durability of the first and second seal lips 30 and 35. In addition, this structure can suppress uneven contact of the shaft to the bushing 10, can suppress uneven wear of the bushing 10, and can improve the durability of the bushing 10.

A method of manufacturing the dust seal 1 having the above structure will now be explained. The explanation for components that are manufactured by a known method will be omitted.

In the dust seal body 20, the attaching portion 21 and the first bellows 22 are integrally molded of the same rubber material. Specifically, the attaching portion 21 and first bellows 22 are integrally molded by vulcanization of the same rubber material. In the molding by vulcanization, the reinforcing ring 24 formed into the above described shape by a known method is placed in a mold, and then, the reinforcing ring 24 is bonded to the attaching portion 21 by vulcanization.

Likewise, the second bellows 23 is molded from a rubber material, specifically, molded by vulcanization molding. In the molding by vulcanization, the fitting ring 29a formed by a known method is placed in a mold, and then, the fitting ring 29a is bonded to the holder 29c by vulcanization. Specifically, the holder 29c is molded by vulcanization with holding the fitting ring 29a and bonded to the fitting ring 29a by vulcanization.

The first claw 13 of the bushing 10 formed by a conventional method such as injection molding is fitted into the first housing portion 26 of the molded first bellows 22. As described above, the first claw 13 is housed in and engaged with the first housing portion 26. At this time, the inner peripheral surface 25a of the contact portion 25 of the first bellows 22 closely contacts the outer peripheral surface 10a of the bushing 10. Thus, the first bellows 22, at the inner peripheral surface, is joined and fixed to the bushing 10. When the first claw 13 is fitted into the first housing portion 26, the contact portion 25 made of a rubber material elastically deforms and the first claw 13 is housed in the first housing portion 25.

The first bellows 22 is fixed to the bushing 10, whereby the attaching portion 21, the first bellows 22, and the bushing 10 are integrated into one component.

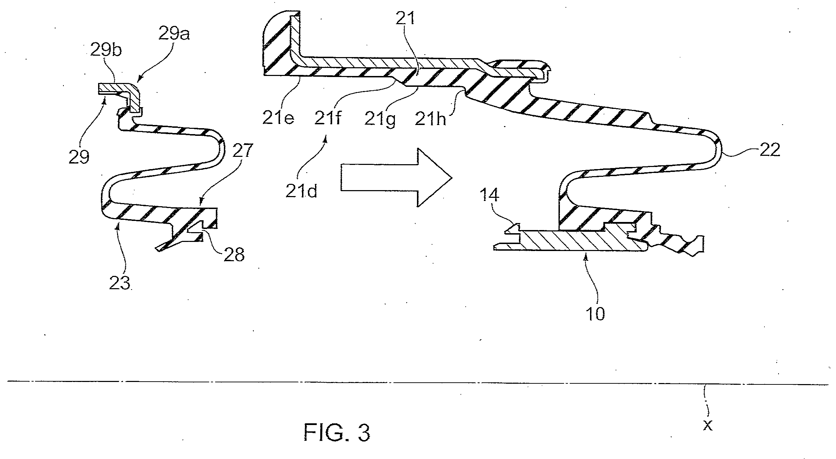

Then, as illustrated in Fig. 3, the second bellows 23 is fitted in between the bushing 10 and the attaching portion 21 by moving the second bellows 23 in the direction of the axis x. Thus, the second claw 14 of the bushing 10 is fitted into the second housing portion 28 of the second bellows 23, and housed in and engaged with the second housing portion 28 as described above; and the second bellows 23, at the contact portion 27, is locked to the bushing 10. At this time, the inner peripheral surface 27a of the contact portion 27 of the second bellows 23 is closely contacts the outer peripheral surface 10a of the bushing 10. At this time, the fitting part 29 is also fitted into the retention surface 21g. Thus, the second bellows 23 is fixed between the bushing 10 and the attaching portion 21.

When the second claw 14 is fitted into the second housing portion 28, the contact portion 27 made of a rubber material elastically deforms and the second claw 14 is housed in the second housing portion 28. When the fitting part 29 is fitted, the cylindrical surface 21e of the inner peripheral surface 21d of the attaching portion 21 keeps the second bellows 23 in a fitting position, the fitting part 29 slides on the taper surface 21g, the second bellows 23 is contracted in the radial direction, and the taper surface 21g smoothly guides the fitting part 29 to the retention surface 21h. Then, the fitting surface 29b of the fitting ring 29a of the fitting part 29 closely contacts the retention surface 29g, and the second bellows 23, the fitting part 29, is fitted into and fixed to the attaching portion 21. The step portion 21h of the inner peripheral surface 21d of the attaching portion 21 enables the fitting part 29 to be positioned toward the outer side in the direction of the axis x.

Thus, the second bellows 23 is fitted and fixed between the bushing 10 and the attaching portion 21, and dust seal 1 is accordingly manufactured.

Thus, the dust seal 1 can be assembled by fitting the first bellows 22 integrally molded with the attaching portion 21 by vulcanization into the bushing 10 and then by fitting the second bellows 23 between the attaching portion 21 and the bushing 10. In other words, the dust seal 1 can be easily assembled simply by fitting the three components, and then, dust seal a can be easily manufactured.

As described above, when the second bellows 23 is fitted, since the taper surface 21f is formed on the inner peripheral surface 21d of the attaching portion 21, the fitting part 29 can be smoothly slid until the retention surface 21g by sliding the fitting part 29 on the taper surface 21f, thereby facilitating works for fitting of the fitting part 29.

As described above, the dust seal 1 according to the first embodiment of the present invention can be manufactured simply by assembling the three components. The assembly works include only fitting the first bellows 22 into the bushing 10 and fitting the second bellows 23 between the bushing 10 and the attaching portion 21. Thus, the dust seal 1 according to the embodiment of the present invention reduces the number of components needed to be assembled, eliminates troublesome assembly works, and facilitates works for assembling the dust seal 1

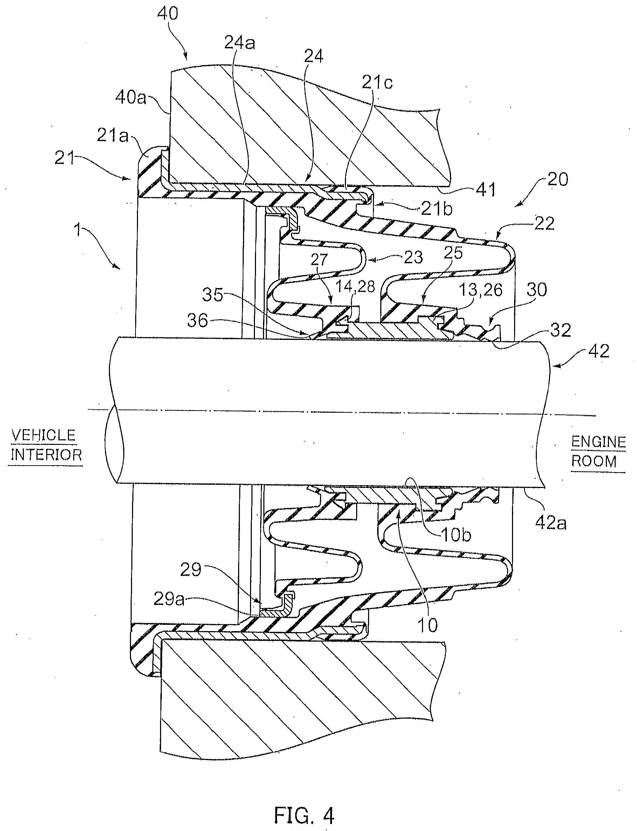

The usage state of the dust seal 1 having the structure described above will now be described. Fig. 4 is a partial cross-sectional view showing the usage state of the dust seal 1 according to the first embodiment of the present invention. The dust seal 1 according to this embodiment is used as a steering dust seal in a steering device of a vehicle, e.g. a car.

As shown in Fig. 4, the dust seal 1 is attached to a column hole 41 opened in a dash panel 40 separating the vehicle interior and the engine room, in order to seal the gap between a steering shaft 42, which is inserted through the column hole 41, and the column hole 41. The dust seal 1 prevents foreign matter such as dust, rain, or the like from entering the vehicle interior.

The dust seal 1 is fixed to the dash panel 40 with the attaching portion 21 fitted into the column hole 41 with predetermined interference. The outer peripheral surface 21c of the end portion 21b of the attaching portion 21 and the outer peripheral surface 24a of the reinforcing ring 24 are in close contact with the column hole 41, thereby sealing the gap between the dash panel 40 and the dust seal 1. The flange 21a of the attaching portion 21 is in contact with a vehicle interior side surface 40a, which is a surface of the dash panel 40 on the vehicle interior side, so that the dust seal 1 is positioned in the direction of the axis x.

The steering shaft 42 is inserted through the bushing 10 and the steering shaft 42 is slid ably supported by the inner peripheral surface 10b of the bushing 10. Since the bushing 10 supports the steering shaft 42 with the inner peripheral surface 10b extending lengthwise in the direction of the axis x, the bushing 10 can follow the movement of the steering shaft 42 and keep a stable position with respect to the steering shaft 42 even if the steering shaft 42 is largely off-center. This can keep an appropriate position of the first seal lip 30 and the second seal lip 35 in contact with the steering shaft 42. A lubricant (not shown in the drawing) is applied to the inner peripheral surface 10b of the bushing 10, which enables smooth sliding of the steering shaft 42. Each of the lip tip 32 of the first seal lip 30 and the lip tip 36 of the second seal lip 35 closely contacts the outer peripheral surface 42a of the steering shaft 42, thereby sealing between the steering shaft 42 and the bushing 10.

Thus, the attaching portion 21 and the first seal lip 30 seal between the column hole 41 and the steering shaft 42 from the engine room side, thereby preventing foreign matter such as dust, rain, or the like from entering the vehicle interior. In addition, the first seal lip 30 and the second seal lip 35 hold the lubricant applied to the inner peripheral surface 10a of the bushing 10 between the bushing 10 and the steering shaft 42, thereby preventing leakage of the lubricant.

The steering shaft 42 is tilted or displaced and moves relative to the column hole 41 due to the adjustment of the height of the steering wheel, vibrations occurring during running of the vehicle, and other causes. Accordingly, with the movement of the steering shaft 42, the bushing 10 moves relatively to the column hole 41. With the movement of the bushing 10, the first bellows 22 and the second bellows 23 expand and contract. This expansion and contraction of the first and second bellows 22 and 23 repeatedly applies load to the joint portion between the first bellows 22 and the bushing 10. As described above, the bushing 10 and each of the first bellows 22 and the second bellows 23 are strongly joined to each other with the first and second claws 13 and 14 and the first and second housing portions 26 and 28. This provides high durability against load repeatedly applied to the joint portion between the bushing portion 10 and each of the first and second bellows 22 and 23, thus suppressing the release of the joint between the bushing 10 and each of the first and second bellows 22 and 23.

The attaching portion 21, the first bellows 22 are integrally formed from the same material, thereby increasing the strength at the joint between the first bellows 22 and the attaching portion 21 (the end portion 22b), therefore it is possible to increase the durability of the dust seal 1 against the load repeatedly applied to the joints.

In this manner, in the dust seal 1 according to this embodiment, the respective joint strength of the joint between each of the first and second bellows 22 and 23 and the bushing 10 and the joint strength of the joint between the first bellow 22 and the attaching portion 21 are increased. This improves the fatigue resistance against repeated expansion and contraction of the dust seal body 20 caused by the movement of the bushing 10, thereby restraining damage to the dust seal body 20 due to the movement of the bushing 10.

Hence, even in the event of an impact to the bushing 10, the risk of the detachment of the bushing 10 from the dust seal body 20 can be sufficiently reduced, the ability of the bushing 10 to follow the steering shaft 42 is maintained, and the position of the first and second seal lips 30 and 35 with respect to the steering shaft 42 can be maintained at the proper position. Therefore, it is possible to improve the sealing performance of the first and second seal lips 30 and 35 and maintain the sealing performance for a long period of time.

As described above, for the dust seal 1 according to the first embodiment of the present invention, the assembly process is simplified and the joint strength between the bushing 10 and each of the first and second bellows 22 and 23 is increased.

Then, a dust seal according to a second embodiment of the present invention will now be described. A dust seal 50 according to the second embodiment of the present invention differs from the dust seal 1 according to the first embodiment of the present invention only in a bushing 60, a contact portion 71 of a first bellows 70, and a contact portion 81 of a second bellows 80. It should be noted that in the following, the same reference numerals or characters are assigned to the components same as or similar to those of the aforementioned dust seal 1 according to the first embodiment of the present invention, and the description thereof is omitted.

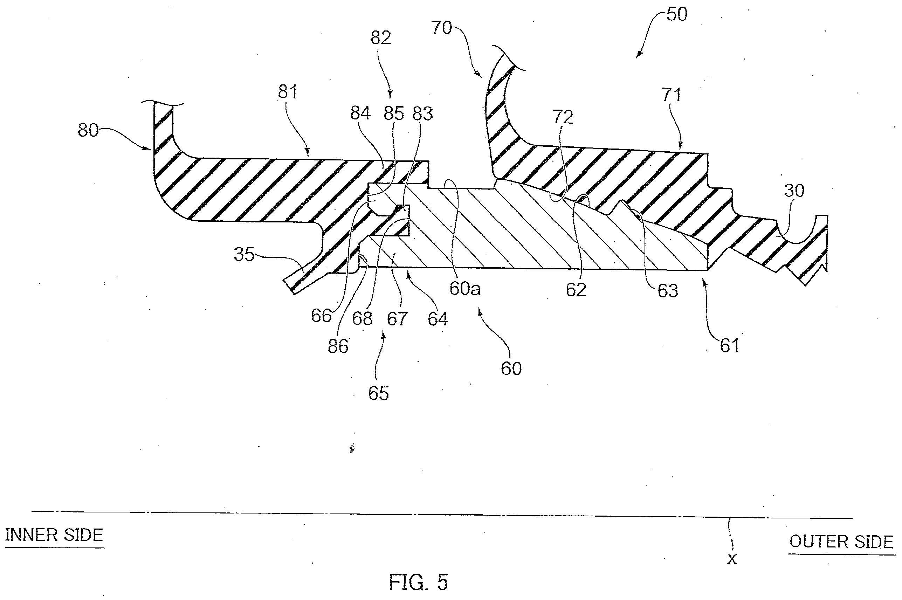

Fig. 5 is a partial sectional view for illustrating a schematic structure of the dust seal 50 according to the second embodiment of the present invention, and an enlarged sectional view illustrating the bushing 60 and the contact portions 71 and 81 in the dust seal 50.

The bushing 60 has a taper surface 62 formed on an outer peripheral surface 60a in an end portion 61 on the outer side. The taper surface 62 is a conical surface whose diameter decreases toward the outer side direction. In addition, tan annular projection 63 projecting toward the outer periphery side direction is formed on the taper surface 62.

In addition, the bushing 60 has a claw 65 in an end portion 64 on the inner side. The claw 65 has a U-shaped cross-section and includes a hook-shaped hook portion 66 extending in the direction of the axis x and a projection 67 projecting in the direction of the axis x. The hook portion 66 faces the projection 67 in the radial direction and a depression 68 is formed therebetween. The hook portion 66 is positioned on the outer periphery side of the projection 67.

In the first bellows 70, an inner peripheral surface 72 of the contact portion 71 has a shape corresponding to the taper surface 62 of the bushing 60, and the inner peripheral surface 72 closely contacts the taper surface 62. Further, the contact portion 71 is bonded to the bushing 60 by vulcanization, between the inner peripheral surface 72 and the taper surface 62.

A contact portion 81 of a second bellows 80 includes a claw 82 engageable with a claw 64 at an end portion on the inner periphery side. The claw 82 has a U-shaped cross section and includes a hook-shaped hook portion 83 extending in the direction of the axis x and a projection 84 projecting in the direction of the axis x. The hook portion 83 faces the projection 84 in the radial direction and a depression 85 is formed therebetween. The hook portion 83 is positioned on the inner periphery side of the projection 84. In addition, in the claw 82, a cutout portion 86 is formed on the inner periphery side of the hook portion 83. The hook portion 66 of the claw 65 has the same cross section as that of the depression 85 of the claw 82. The hook portion 83 of the claw 82 has the same cross section as that of the depression 68 of the claw 66. The cutout 86 of the claw 81 has the same cross section as that of the projection 67 of the claw 65.

As illustrated in Fig. 5, in the dust seal 50, the claw 65 of the bushing 60 is engaged with the claw 82 of the second bellows 80 and the second bellows 80 is locked to the bushing 60 on the inner side. Specifically, the hook portion 66 of the claw 65 is housed in the depression 85 of the claw 82 in close contact with each other; the hook portion 83 of the claw 82 is housed in the depression 68 of the claw 65 in close contact with each other; and the hook portion 66 is engaged with the hook portion 82 in the direction of the axis x. In addition, the projection 84 contacts the hook portion 66 on the outer periphery side and the projection 67 contacts the hook portion 83 on the inner periphery side. Thus, the second bellows 80 is firmly locked and bonded to the bushing 60 by the engagement between the claw 65 and the claw 82.

Then, a method of manufacturing the dust seal 50 will be described. In the dust seal body 20, the attaching portion 21 and the first bellows 70 are integrally molded by vulcanization from the same rubber material. In addition, in the molding by vulcanization, the bushing 60 and the reinforcing ring 24 formed into the above shape by a known method are placed in a mold, the bushing 60, at the taper surface 62, is bonded to the inner peripheral surface 72 of the contact portion 71 by vulcanization, and the reinforcing ring 24 is bonded to the attaching portion 21 by vulcanization. Likewise, the second bellows 80 is molded from a rubber material by vulcanization.

Then, in the same manner as in the method of manufacturing the dust seal 1, the second bellows 80 is fitted between the bushing 60 and the attaching portion 21 by moving the second bellows 80 in the direction of the axis x. Thus, the claw 65 of the bushing 60 is engaged with the claw 82 of the second bellows 80 as described above, the second bellows 80, at the contact portion 81, is locked to the bushing 60, and the fitting part 29 of the second bellows 80 is fitted into the attaching portion 21, thereby completing the dust seal 50.

The dust seal 50 according to the second embodiment of the present invention can provide the same effects as the dust seal 1 according to the first embodiment of the present invention, can facilitate assembly works, and can increase the bonding strength between the bushing 60 and each of the first and second bellows 70 and 80.

Although the embodiments of the present invention have been described, the present invention should not be limited to the aforementioned embodiments of the present invention and includes various modes included in the scope of the concept of the present invention and Claims. Moreover, the structures can selectively be combined as appropriate so that at least part of the above-described solution and effects can be provided. For example, the shape, material, position, size, and other conditions for each component in the above embodiments can be modified as appropriate according to the actual usage mode of the present invention. In particular, the shapes, such as shapes of the attaching portion 21, the reinforcing ring 24, the first and second seal lips 30 and 35, and the bellows of the first and second bellows 22, 23, 70, and 80 and the like should not be limited to the above-described shapes.

Further, in the dust seal 1, the engaging part between the bushing 10 and the first bellows 22 is not limited to the engaging part including the first claw 13 and the first housing portion 26, but may be any engaging part as long as the engaging part can engage the end portion (contact portion 25) of the first bellows 22 with the outer peripheral surface 10a of the bushing 10.

In addition, a locking part between the bushing 10 and the second bellows 23 is not limited to the locking part including the second claw 14 and the second housing portion 28, but may be any locking part as long as the locking part can lock the end portion (contact portion 27) of the second bellows 23 to the outer peripheral surface 10a of the bushing 10.

In addition, in the dust seal 50, the joint portion between the bushing 60 and the first bellows 70 is not limited to the joint portion including the taper surface 62 and the inner peripheral surface 72, but may be any joint portion as long as the joint portion can bring the end portion (contact portion 71) of the first bellows 70 into contact with the outer peripheral surface 60a of the bushing 60 and can bond the end portion of the bellows 70 to the outer peripheral surface 60a by vulcanization.

Likewise, the locking part between the bushing 60 and the second bellows 80 is not limited to the locking part including the claws 65 and 82, but may be any locking part as long as the locking part can lock the end portion (contact portion 81) of the second bellows 80 to the outer peripheral surface 10a of the bushing 60.

In addition, in the dust seals 1 and 50, the shape of the fitting part 29 of the second bellows 23 and 80 is not limited to the aforementioned shape and the shape of the inner peripheral surface 21d (retention surface 21g, etc.,) of the attaching portion 21 is not limited to the aforementioned shape as long as the shape can fit the fitting part 29 of the second bellows 23 and 80 to the inner peripheral surface 21d of the attaching portion 21. In addition, the shape of the outer peripheral surface of the second bellows 23 and 80 may not be fitted to the inner peripheral surface of the attaching portion 21, but may be any shape as long as the shape enables fixing by another engagement, locking, or other mode.

In addition, the dust seals 1 and 50 assume that the first seal lip 30 and the second seal lip 35 are provided, but only the first seal lip 30 on the engine room side may be provided.

Although the dust seals 1 and 50 according to the first and second embodiments of the present invention are used as a steering dust seal in a vehicle in the above description, the application of a dust seal of the present invention should not be limited thereto and the present invention can be applied to any structure that can use the effects of the present invention, such as industrial machines.

### List of Reference Signs

- 1, 50, 100: dust seal
- 10, 60, 101: bushing
- 10a, 60a: outer peripheral surface
- 10b: inner peripheral surface
- 11,12, 61, 64, 101a, 101b: end portion
- 11a, 12a: end portion outer peripheral surface
- 13: first claw
- 14: second claw
- 15: projection
- 16, 18, 68: depression
- 17, 66, 83: hook portion
- 17a: taper surface
- 17b: step portion
- 19: trench
- 20, 102: dust seal body
- 21, 107: attaching portion
- 21a: flange
- 21b: end portion
- 21c: outer peripheral surface
- 21d: inner peripheral surface
- 21e: cylindrical surface
- 21f: taper surface
- 21g: retention surface
- 21h: step portion
- 22, 70, 105: first bellows
- 22a, 23b: convex portion
- 22b, 22c, 23c, 23d: end portion
- 23, 80, 106: second bellows
- 23a: concave portion
- 24, 108: reinforcing ring
- 24a: outer peripheral surface
- 25, 27, 71, 81: contact portion
- 25a, 27a, 72: inner peripheral surface
- 25b, 27b: end portion
- 26: first housing portion
- 26a, 28a, 85: depression
- 26b, 28b: projection
- 28: second housing portion
- 28c: step portion
- 29: fitting part
- 29a: fitting ring
- 29b: fitting surface
- 29c: holder
- 30: first seal lip
- 31: end portion
- 32, 36: lip tip
- 35: second seal lip
- 40, 131: dash panel
- 40a: vehicle interior side surface
- 41, 132: column hole
- 42, 130: steering shaft
- 42a: outer peripheral surface
- 62: taper surface
- 63: projection
- 65, 82: claw
- 67, 84: projection
- 86: cutout
- 103: seal lip
- 104: attaching member
- 105a, 106a: inner end portion
- x: axis

## Claims

1. A dust seal for sealing a gap between an opening in a receiving member and a shaft inserted through the opening, comprising:
a dust seal body in an annular shape centered about an axis; and
a bushing in an annular shape centered about the axis, through which the shaft is slidably inserted, **characterized in that**
the dust seal body including:
an attaching portion that is fitted into the opening of the receiving portion, is in an annular shape centered about the axis, and is made of an elastic material,
a first accordion unit that has an accordion made of an elastic material and is an annular shape centered about the axis, and
a second accordion unit that has an accordion made of an elastic material and is an annular shape centered about the axis,
the first accordion unit and the second accordion unit are arranged side by side in a direction of the axis,
the first accordion unit is integral with the attaching portion, is joined to an inner peripheral surface of the attaching portion at an outer periphery, and is fixed to an outer peripheral surface of the bushing at an inner periphery, and
the second accordion unit is fixed to the inner peripheral surface of the attaching portion at the outer periphery, and locked to the bushing at the inner periphery.

2. The dust seal according to Claim 1, **characterized in that** the second accordion unit is locked to the bushing at the inner periphery by engagement between the second accordion unit and the bushing.

3. The dust seal according to Claim 1 or 2, **characterized in that** the second accordion unit is fitted to an inner peripheral surface of the attaching portion at the outer periphery and fixed to the attaching portion.

4. The dust seal according to any one of Claims 1 to 3, **characterized in that** the first accordion unit includes a first seal lip extending in the direction of the axis, and the first seal lip slidably contacts an outer peripheral surface of the shaft.

5. The dust seal according to Claim 4, **characterized in that** the second accordion unit includes a second seal lip extending in the direction of the axis, and the second seal lip slidably contacts the outer peripheral surface of the shaft.
